(19) Europäisches Patentamt
European Patent Office
Office européen des brevets

(11) **EP 2 278 388 A1**

(12) **EUROPEAN PATENT APPLICATION**
published in accordance with Art. 153(4) EPC

(43) Date of publication:
**26.01.2011 Bulletin 2011/04**

(21) Application number: **09746684.1**

(22) Date of filing: **11.05.2009**

(51) Int Cl.:
**G02C 7/12** *(2006.01)*  **G02B 1/04** *(2006.01)*
**G02B 5/30** *(2006.01)*  **G02C 7/02** *(2006.01)*

(86) International application number:
**PCT/JP2009/059099**

(87) International publication number:
**WO 2009/139478 (19.11.2009 Gazette 2009/47)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **13.05.2008 JP 2008125851**

(71) Applicant: **Teijin Chemicals, Ltd.**
**Chiyoda-ku**
**Tokyo 100-0013 (JP)**

(72) Inventors:
• **ONIZAWA, Tomomitsu**
**Tokyo 100-0013 (JP)**

• **TATSUKAWA, Yasuhiro**
**Tokyo 100-0013 (JP)**
• **MURAKAMI, Masahiro**
**Tokyo 100-0013 (JP)**
• **YAMAUCHI, Atsushi**
**Tokyo 100-0013 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **POLARIZING EYEGLASS LENS**

(57)    The object of this invention is to provide a polarizing ophthalmic lens excellent in impact resistance and free of separation, soiling, etc., even when it contains an ultraviolet absorbent.

This invention is a polarizing ophthalmic lens obtained by inserting a functional film formed of a polarizing film and polycarbonate films which have a retardation value of 3,000 nm or more each and are attached to both surfaces of the polarizing film into a mold beforehand, and injecting a resin composition to carry out molding, said resin composition containing 100 parts by weight of an aromatic polycarbonate resin having a viscosity average molecular weight of 17,000 to 26,000 and 0.1 to 0.5 part by weight of an ultraviolet absorbent having a molecular weight of 300 or more, the content of low-molecular-weight components having a molecular weight of 1,000 or less being 1 % by weight or less.

**Description**

Technical Field

This invention relates to a polarizing ophthalmic lens produced by insert-molding a polarizing film in an aromatic polycarbonate resin.

Background Art

A polarizing film is used for glare protection in a wide range of areas, and there are attempts made to apply the same to ophthalmic lenses. Patent Document 1 describes that a polarizing plate free of coloring interference fringes can be provided by attaching polycarbonate sheet(s) having a predetermined retardation value to one surface or both surfaces of a polarizing film. Further, Patent Document 2 discloses a method for insert-molding a functional film.
As it is increasingly demanded to enhance the safety of ophthalmic lenses in recent years, in particular, as it is increasingly demanded to keep ophthalmic lenses for use in sports and ophthalmic lenses for children from breaking, there is a sharp increase in the use of an aromatic polycarbonate resin. Further, the intended use of polarizing ophthalmic lenses for glare protection is mainly an outdoor use, and they are hence demanded to have ultraviolet protection from the viewpoint of eyeball protection.
An aromatic polycarbonate resin has a high melt viscosity and a high molding temperature. When a functional film is insert-molded, therefore, there is caused a problem that since the functional film is all melted during the molding, creases occur or the polarizing function is decreased. Further, another problem is that low-molecular-weight components in the aromatic polycarbonate resin volatilize or bleed on the aromatic polycarbonate resin surface during molding, which leads to a decrease in adhesion to a functional film or adherence to an inside of a mold to soil a polarizing ophthalmic lens. In particular, there is employed a method of adding an ultraviolet absorbent to an aromatic polycarbonate resin in order to cope with the demand for ultraviolet protection, while the contamination of a polarizing ophthalmic lens and the soiling of a mold by an ultraviolet absorbent are big problems, and there is involved a peeling problem caused by a decrease in adherence between a functional film and an aromatic polycarbonate resin. On the other hand, the mold is disassembled and cleaned to cope with it, which leads to a problem that the productivity is greatly decreased.

(Patent Document 1) JP-A 03-039903
(Patent Document 2) US Patent No. 6814896 description

Disclosure of the Invention

It is an object of this invention to provide a polarizing ophthalmic lens that is excellent in impact resistance and that is less susceptible to peeling, creases and soiling even when an ultraviolet absorbent is contained. It is another object of this invention to provide a method for highly productively producing a polarizing ophthalmic lens that is excellent in impact resistance and that is less susceptible to peeling, creases and soiling. It is further another object of this invention to provide a method for preventing the soiling of a polarizing ophthalmic lens.
The present inventors have found that by injecting an aromatic polycarbonate resin of which the low-molecular-weight component content is small to carry out insert-molding, there can be obtained a polarizing ophthalmic lens that is excellent in impact resistance and that is less susceptible to peeling and soiling even when an ultraviolet absorbent is contained, and the present invention has been accordingly completed.
That is, this invention includes the following inventions.

1. A polarizing ophthalmic lens obtained by inserting a functional film formed of a polarizing film and polycarbonate films which have a retardation value of 3,000 nm or more each and are attached to both surfaces of the polarizing film into a mold beforehand, and injecting a resin composition to carry out molding **characterized in that**,
said resin composition containing 100 parts by weight of an aromatic polycarbonate resin having a viscosity average molecular weight of 17,000 to 26,000 and 0.1 to 0.5 part by weight of an ultraviolet absorbent having a molecular weight of 300 or more, the content of low-molecular-weight components having a molecular weight of 1,000 or less being 1 % by weight or less.
2. A polarizing ophthalmic lens as recited in the above 1, wherein said resin composition has a light transmittance of 0.01 % or less at a wavelength of 380 nm when it has a thickness of 2 mm.
3. A polarizing ophthalmic lens as recited in the above 1 or 2, wherein the polycarbonate film on the side where said resin composition is injected has a thickness of 30 to 1,000 $\mu$m.
4. A method for producing a polarizing ophthalmic lens, which comprises inserting a functional film formed of a polarizing film and polycarbonate films which have a retardation value of 3,000 nm or more each and are attached to both surfaces of the polarizing film into a mold beforehand, and injecting a resin composition to carry out molding **characterized in that**

said resin composition contains 100 parts by weight of an aromatic polycarbonate resin having a viscosity average molecular weight of 17,000 to 26,000 and 0.1 to 0.5 part by weight of an ultraviolet absorbent having a molecular weight of 300 or more, and the content of low-molecular-weight components having a molecular weight of 1,000 or less is 1 % by weight or less.

5. A method as recited in the above 4, wherein said resin composition has a light transmittance of 0.01 % or less at a wavelength of 380 nm when it has a thickness of 2 mm.

6. A method as recited in the above 4 or 5, wherein the polycarbonate film on the side where said resin composition is injected has a thickness of 30 to 1,000 μm.

7. A method for preventing the soiling of a polarizing ophthalmic lens in the production of the polarizing ophthalmic lens by inserting a functional film formed of a polarizing film and polycarbonate films which have a retardation value of 3,000 nm or more each and are attached to both surfaces of the polarizing film into a mold beforehand and injecting a resin composition to carry out molding **characterized in that**

the method comprising using, as said resin composition, a resin composition containing 100 parts by weight of an aromatic polycarbonate resin having a viscosity average molecular weight of 17,000 to 26,000 and 0.1 to 0.5 part by weight of an ultraviolet absorbent having a molecular weight of 300 or more, the content of low-molecular-weight components having a molecular weight of 1,000 or less being 1 % by weight or less.

8. A method as recited in the above 7, wherein said resin composition has a light transmittance of 0.01 % or less at a wavelength of 380 nm when it has a thickness of 2 mm.

9. A method as recited in the above 7 or 8,

wherein the polycarbonate film on the side where said resin composition is injected has a thickness of 30 to 1,000 μm.

Brief Explanation of Drawings

Fig. 1 is a drawing of an apparatus for producing a polycarbonate film.
Fig. 2 is a drawing of a machine-direction monoaxial-stretching machine for stretching a polycarbonate film.

Explanation of Symbols

1.       T-die
2.       First cooling role
3.       Second cooling role
4.       Third cooling role
5.       Take-up roll
6.       Melt-extruded polycarbonate resin film
7.       Supply side nip roll
8.       Take-up side nip roll
9.       Heating chamber
V1.      Supply speed
V2.      Take-up speed
V2/V1.   Stretch ratio

Preferred Embodiments of the Invention

This invention will be explained in detail hereinafter.

(Aromatic polycarbonate resin)

The polycarbonate resin for use in this invention is obtained, for example, by reacting a dihydric phenol with a carbonate precursor. Specific examples of the above dihydric phenol includes bis(hydroxyaryl)alkanes such as 2,2-bis(4-hydroxyphenyl)propane (generally called bisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxyphenyl)phenylmethane, 2,2-bis(4-hydroxy-3-methylphenyl)propane, 1,1-bis(4-hydroxy-3-tert-butylphenyl)propane, 2,2-bis(4-hydroxy-3-bromophenyl)propane, 2,2-bis(4-hydroxy-3,5-dibromophenyl)propane, 2,2-bis(4-hydroxy-3,5-dichlorophenyl)propane, etc. They also include bis(hydroxyphenyl)cycloalkanes such as 1,1-bis(hydroxyphenyl)cyclopentane, 1,1-bis(hydroxyphenyl)cyclohexane, etc. Further, they also include dihydroxyaryl ethers such as 4,4'-dihydroxydiphenyl ether, 4,4'-dihydroxy-3,3'-dimethyldiphenyl ether, etc. Further, they also include dihydroxydiaryl sulfides such as 4,4'-dihydroxydiphenyl sulfide, 4,4'-dihydroxy-3,3'-dimethyldiphenyl sulfide, etc. Further, they also include dihydroxydiaryl sulfoxides such as 4,4'-dihydroxydiphenyl sulfoxide, 4,4°-dihydroxy-3,3°-dimethyldiphenyl sulfoxide, etc. Further, they also include dihydroxydiaryl sulfones such as 4,4'-dihydroxydiphenyl sulfone, 4,4'-dihydroxy-3,3'-dimethyldiphenyl sulfone, etc. These dihydric phenols may be used singly or in combination of two or more of them,

Of the above dihydric phenols, it is preferred to use 2,2-bis(4-hydroxyphenyl)propane (bisphenol A) as a main dihydric phenol component, and it is more preferred to use bisphenol A in an amount of 70 mol% or more, in particular 80 mol% or more, based on the total of dihydric phenol components. The most preferred is an aromatic polycarbonate resin of which the dihydric phenol component is substantially bisphenol A.

Basic means for producing the aromatic polycarbonate resin will be briefly explained. In a solution method using phosgene as a carbonate precursor, normally, there is carried out a reaction between a dihydric phenol component and phosgene in the presence of an acid binder and an organic solvent. The acid binder is selected, for example, from hydroxides of alkali metals such as sodium hydroxide, potassium hydroxide, etc., or amine compounds such as pyridine. The organic solvent is selected, for example, from halogenated hydrocarbons such as methylene chloride, chlorobenzene, etc. For promoting the reaction, for example, a catalyst such as tertiary amine, quaternary ammonium salt, etc., can be used. As a molecular weight adjuster, it is desirable to use, for example, a terminal stopper such as a phenol or an alkylsubstituted phenol exemplified by p-tert-butylphenol. The reaction temperature is normally 0 to 40°C, the reaction time period is several minutes to 5 hours, and it is preferred to maintain a pH during the reaction at 10 or more.

An ester exchange method (melting method) using carbonate diester as a carbonate precursor is a method in which predetermined amounts of a dihydric phenol component and carbonate diester are stirred under heating in the presence of an inert gas, and an alcohol or phenols generated are distilled off. Although differing depending upon the boiling point, etc., of the generated alcohol or phenols, the reaction temperature is normally in the range of 120 to 350°C. The reaction is carried out under reduced pressure from its initial stage while distilling off the generated alcohol or phenols. For promoting the reaction, further, a general ester exchange reaction catalyst can be used. Examples of the carbonate diester for use in this ester exchange reaction include diphenyl carbonate, dinaphthyl carbonate, dimethyl carbonate, diethyl carbonate, dibutyl carbonate, etc., and in particular, diphenyl carbonate is preferred.

The viscosity average molecular weight of the aromatic polycarbonate resin for use in this invention is 17,000 to 26,000, preferably 18,000 to 25,000, more preferably 19,000 to 22,500. When the molecular weight exceeds 26,000, creases or the decrease of the polarizing function takes place during the insert-molding of a functional film. Further, an ophthalmic lens is a precision-molded product. And, it is essential to impart a defined curvature and a lens power by accurately transferring the form of mirror surface of a mold, and a low-viscosity resin having good melt-flowability is desirable. When the viscosity average molecular weight is too low, however, the impact strength that the aromatic polycarbonate resin characteristically has cannot be maintained. The viscosity average molecular weight (M) of an aromatic polycarbonate resin is determined by substituting a specific gravity ($\eta_{sp}$) determined from a solution of 0.7 g of the polycarbonate resin in 100 ml of methylene chloride at 20°C with an Ostwald viscometer into the following expression.

$$\eta_{sp}/c \;=\; [\eta] + 0.45 \;\times\; [\eta]^2 c$$

(wherein [$\eta$] is an intrinsic viscosity)

$$[\eta] \;=\; 1.23 \;\times\; 10^{-4} M^{0.83}$$

$$c = 0.7$$

(Ultraviolet absorbent}

The resin composition contains an ultraviolet absorbent having a molecular weight of 300 or more for ultraviolet protection. The molecular weight of the ultraviolet absorbent is preferably 500 or more, more preferably 600 or more. Although not specially limited, the upper limit of the molecular weight is preferably 1,000 or less.

The content of the ultraviolet absorbent having a molecular weight of 300 or more per 100 parts by weight of the aromatic polycarbonate resin is 0.1 to 0.5 part by weight, preferably 0.1 to 0.4 part by weight, more preferably 0.1 to 0.3 part by weight.

The content of the ultraviolet absorbent having a molecular weight of 500 or more but less than 700 per 100 parts by weight of the aromatic polycarbonate resin is preferably 0.01 to 0.2 part by weight, more preferably 0.02 to 0.2 part by weight. The content of the ultraviolet absorbent having a molecular weight of 300 or more but less than 500 per 100 parts by weight of the aromatic polycarbonate resin is preferably 0.4 part by weight or less, more preferably 0.3 part by weight or less.

An ultraviolet absorbent having a molecular weight of less than 300 may be incorporated. The ultraviolet absorbent having a molecular weight of less than 300 per 100 parts by weight of the ultraviolet absorbent having a molecular weight of 300 or more is preferably 10 to 200 parts by weight, more preferably 10 to 100 parts by weight.

The ultraviolet absorbent shall not be specially limited in kind, while it includes benzotriazole ultraviolet absorbents, benzophenone ultraviolet absorbents, triazine ultraviolet absorbents, cyclic iminoester ultraviolet absorbents, cyanoacrylate ultraviolet absorbents, etc.

The benzotriazole ultraviolet absorbents include 2-(2-hydroxy-5-methylphenyl)benzotriazole, 2-(2-hydroxy-5-tert-octylphenyl)benzotriazole, 2-(2-hydroxy-3,5-dicumulphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzooxazin-4-one) and 2-[2-hydroxy-3-(3,4,5,6-tetrahydrophthalimidemethyl)-5-methylphenyl]benzotriazole. These may be used singly or as a mixture of two or more of them.

As a benzotriazole ultraviolet absorbent, preferred are 2-(2-hydroxy-5-methylphenyl)benzotriazole, 2-(2-hydroxy-5-tert-octylphenyl)benzotriazole, 2-(2-hydroxy-3,5-dicumulphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol] and 2-[2-hydroxy-3-(3,4,5,6-tetrahydrophthalimidemethyl)-5-methylphenyl]benzotriazole. 2-(2-hydroxy-5-tert-octylphenyl)benzotriazole and 2,2'-methylenebis[4-(1,1,3,3-tetramethylbutyl)-6-(2H-benzotriazol-2-yl)phenol] are more preferred.

The benzophenone ultraviolet absorbents include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrideratebenzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone, 2-hydroxy-4-methoxy-2'-carboxybenzophenone, etc.

The triazine ultraviolet absorbents include 2-(4,6-diphenyl-1,3,5-triazin-2-yl)-5-[(hexyl)oxy]-phenol, 2-(4,6-bis(2,4-dimethylphenyl)-1,3,5-triazin-2-yl)-5-[(octyl)oxy]phenol, etc.

The cyclic iminoester ultraviolet absorbents include 2,2'-bis(3,1-benzooxazin-4-one), 2,2'-p-phenylenebis(3,1-benzooxazin-4-one), 2,2'-m-phenylenebis(3,1-benzooxazin-4-one), 2,2'-(4,4'-diphenylene)bis(3,1-benzooxazin-4-one), 2,2'-(2,6-naphthalene)bis(3,1-benzooxazin-4-one), 2,2'-(1,5-naphthalene)bis(3,1-benzooxazin-4-one), 2,2'-(2-methyl-p-phenylene)bis(3,1-benzooxazin-4-one), 2,2'-(2-nitro-p-phenylene)bis(3,1-benzooxazin-4-one) and 2,2'-(2-chloro-p-phenylene)bis(3,1-benzooxazin-4-one). Of these, 2,2'-p-phenylenebis(3,1-benzooxazin-4-one), 2,2'-(4,4'-diphenylenebis(3,1-benzooxazin-4-one) and 2,2'-(2,6-naphthalenebis(3,1-benzooxazin-4-one) are preferred. In particular, 2,2'-p-phenylenebis(3,1-benzooxazin-4-one) is preferred. These compounds are commercially supplied as CEi-P (trade name) by TAKEMOTO OIL & FAT CO., LTD., and easily available.

The cyanoacrylate ultraviolet absorbents include 1,3-bis[(2'-cyano-3',3'-diphenylacryloyl)oxy]-2,2-bis[(2-cyano-3,3-diphenylacryloyl)oxy]methyl)propane, 1,3-bis[(2-cyano-3,3-diphenylacryloyl)oxylbenzene, etc.

(Low-molecular-weight components)

The content of low-molecular-weight components having a molecular weight of 1,000 or less in the resin composition is 1 % by weight or less, preferably 0.8 % by weight. When the content of low-molecular-weight components is large, the polarizing ophthalmic lens or a mold is soiled by an adhering substance, or it takes time to disassemble and clean the mold, which leads to a decrease in productivity. Further, low-molecular-weight components may decrease the adherence of the functional film and the aromatic polycarbonate resin, which may sometimes cause the problem of peeling, etc.

The above content of the low-molecular-weight components refers to the total content of an unreacted material, a monomer, an oligomer, an impurity, etc., which are generated in the process of polymerizing the aromatic polycarbonate resin in addition to an additive that is added when the resin composition is prepared. The content of the low-molecular-weight components can be quantitatively determined by any known measurement method available in this technical field, and in particular a GPC method is suitably applied.

For bringing the content of the low-molecular-weight components in the resin composition into 1 % by weight or less, it is required to use an aromatic polycarbonate resin having a low content of the low-molecular-weight components and to decrease the content of additives having a molecular weight of 1,000 or less such as a mold release agent, a thermal stabilizer, etc.

For decreasing an unreacted material, a monomer, an oligomer, an impurity, etc., which are generated in the process of polymerizing the aromatic polycarbonate resin, there can be employed a method of accelerating a polymerizing reaction rate by a catalyst, etc., a method of removing the low-molecular-weight components by washing with a poor solvent to the aromatic polycarbonate resin such as acetone, etc., and a method of adding a low-boiling-point material such as water, etc., and causing an azeotropy in a vacuum vent when melt-extrusion is carried out.

(Light transmittance)

In this invention, the spectral light transmittance of the resin composition at a wavelength of 380 nm when it has a thickness of 2 mm is preferably 0.01 % or less, more preferably 0.005 % or less.

To cope with the eyeball function protection, UV protection was conventionally employed, and in particular, polycarbonate has absorption as a polymer per se and has been hence effective for UV-B protection. The influence of UV-A on the eyeball function has attracted attention in recent years, and the ultraviolet protection is the important matter of an ophthalmic lens.

(Others)

In this invention, the resin composition may contain a mold release agent, a thermal stabilizer, a bluing agent, an antistatic agent, a flame retardant, a heat radiation blocking agent, a fluorescent dye (including a fluorescent brightener), a pigment, a light scattering agent, a reinforcement filler, other resin, an elastomer, etc., so long as the objects of this invention are not impaired.

The resin composition may contain a mold release agent. In the mold release agent, preferably, at least 90 % of it is composed of an ester of an alcohol and a fatty acid. The ester of an alcohol and a fatty acid specifically includes an ester of a monohydric alcohol and a fatty acid and/or a partial ester or whole ester of a polyhydric alcohol and a fatty acid. The ester of a monohydric alcohol and a fatty acid is preferably an ester of a monohydric alcohol having 1 to 20 carbon atoms and a saturated fatty acid having 10 to 30 carbon atoms. The partial ester or whole ester of a polyhydric alcohol and a fatty acid is preferably a partial ester or whole ester of a polyhydric alcohol having 1 to 25 carbon atoms and a saturated fatty acid having 10 to 30 carbon atoms.

The ester of a monohydric alcohol and a saturated fatty acid includes stearyl stearate, palmityl palmitate, butyl stearate, methyl laurate, isopropyl palmitate, etc. Of these, stearyl stearate is preferred.

The partial ester or whole ester of a polyhydric alcohol and a saturated fatty acid includes glycerin monostearate, glycerin distearate, glycerin tristearate, stearic acid monosorbitate, behenic acid monoglyceride, pentaerythritol monostearate, pentaerythritol tetrastearate, pentaerythritol tetrapelargonate, propylene glycol monostearate, biphenyl biphenate, sorbitan monostearate, 2-ethylhexyl stearate, a whole ester or partial ester of dipentaerythritol such as dipentaerythritol hexastearate, etc.

Of these esters, glycerin monostearate, glycerin tristearate, pentaerythritol tetrastearate and a mixture of glycerin tristearate with stearyl stearate are preferably used.

The amount of the ester in the mold release agent when the amount of the mold release agent is 100 % by weight is preferably 90 % by weight or more, more preferably 95 % by weight or more.

The content of the mold release agent in the resin composition per 100 parts by weight of the aromatic polycarbonate resin is preferably in the range of 0.005 to 1.0 part by weight, more preferably 0.01 to 0.6 part by weight, still more preferably 0.02 to 0.5 part by weight.

The resin composition may contain a thermal stabilizer. The thermal stabilizer includes phosphorus-containing thermal stabilizers, sulfur-containing thermal stabilizers and hindered phenol-containing stabilizers.

The phosphorus-containing stabilizers include phosphorous acid, phosphoric acid, phosphonous acid, phosphonic acid and esters of these. Specifically, they include triphenyl phosphite, tris(nonylphenyl)phosphite, tris(2,4-di-tert-butylphenyl)phosphite, tris(2,6-di-tert-butylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl)pentaerythritol diphosphite, 2,2-methylenebis(4,6-di-tert-butylphenyl)octyl phosphite, bis(nonylphenyl)pentaerythritol diphosphite, bis(2,4-di-tert-butylphenyl)pentaerythritol diphosphite, distearylpentaerythritol diphosphite, tributyl phosphate, triethyl phosphate, trimethyl phosphate, triphenyl phosphate, diphenylmonoorthoxenyl phosphate, dibutyl phosphate, dioctyl phosphate, diisopropyl phosphate, dimethyl benzenephosphonate, diethyl benzenephosphonate, dipropyl benzenephosphonate, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, etc.

Of these, tris(2,4-di-tert-butylphenyl)phosphite, tris(2,6-di-tert-butylphenyl)phosphite, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, bis(2,4-di-tert-butylphenyl)-4-phenyl-phenyl phosphonite and bis(2,4-di-tert-butylphenyl)-3-phenyl-phenyl phosphonite are preferred. In particular, tetrakis(2,4-di-tert-butylphenyl)-4,4'-biphenylene diphosphonite is preferred.

The content of the phosphorus-containing thermal stabilizer in the resin composition per 100 parts by weight of the aromatic polycarbonate resin is preferably 0.001 to 0.2 part by weight.

The sulfur-containing thermal stabilizers include pentaerythritol-tetrakis(3-laurylthiopropionate), pentaerythritol-tetrakis(3-myristylthiopropionate), pentaerythritol-tetrakis(3-stearylthiopropionate), dilauryl-3,3'-thiodipropionate, dimyristyl-3,3'-thiodipropionate, distearyl-3,3'-thiodipropionate, etc. Of these, pentaerythritol-tetrakis(3-laurylthiopropionate), pentaerythritol-tetrakis(3-myristylthiopropionate), dilauryl-3,3'-thiodipropionate and dimyristyl-3,3'-thiodipropionate are preferred. In particular, pentaerythritol-tetrakis(3-laurylthiopropionate) is preferred. The above thioether compounds are commercially supplied as Sumilizer TP-D (trade name) and Sumilizer TMP (trade name) by Sumitomo Chemical Co., Ltd., and easily available.

The content of the sulfur-containing thermal stabilizer in the resin composition per 100 parts by weight of the aromatic polycarbonate resin is preferably 0.001 to 0.2 part by weight.

The hindered phenol-containing thermal stabilizers include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxyhydrocinnamide, 3,5-di-tert-butyl-4-hydroxybenzenesulfonate-diether ester, tris(3,5-di-tert-butyl-4-hydroxybenzyl)isocyanurate, 3,9-bis{1,1-dimethyl-2-[β-3-(tert-butyl-4-hydroxy-5-methylphenyl)propionyloxy]ethyl}-2,4,8,10-tetraoxaspiro(5,5) undecane, etc. In particular, octadecyl-3-(3,5-di-tert-butyl-4-hydroxyphenyl)propionate is preferred.

The content of the hindered phenol-containing thermal stabilizer in the resin composition per 100 parts by weight of the aromatic polycarbonate resin is preferably 0.001 to 0.3 part by weight.

The resin composition may contain a bluing agent. The bluing agent includes Macrolex Violet B and Macrolex Blue RR both supplied by Bayer AG and Polysynthren Blue RLS supplied by Clariant Corporation. The bluing agent is effective for erasing the yellow tint of the aromatic polycarbonate resin. The content of the bluing agent based on the aromatic polycarbonate resin is preferably 0.05 to 1.5 ppm, more preferably 0.1 to 1.2 ppm.

The polarizing ophthalmic lens of this invention has a structure in which the resin composition layer is laminated on one surface of a functional film. The thickness of the resin composition layer is preferably 0.1 to 5 mm, more preferably 0.1 to 3 mm, still more preferably 0.3 to 2 mm. The thickness of the functional film is preferably 10 to 2,000 $\mu$m, more preferably 50 to 1,500 $\mu$m, still more preferably 100 to 1,000 $\mu$m.

(Functional film)

In this invention, the functional film that is inserted into a mold beforehand when insert-molding is carried out is obtained by attaching a polycarbonate film having a retardation value of 3,000 nm or more onto each of the surfaces of a polarizing film. The polycarbonate resin for forming the polycarbonate film is preferably formed from the aromatic polycarbonate resin that is already described. Preferably, the polycarbonate film does not contain any additives such as an ultraviolet absorbent.

The retardation value of the polycarbonate film is defined by the following expression.

$$\text{Retardation value (R)} = \Delta n \times d$$

wherein $\Delta n$ is a birefringence of the polycarbonate film, and d is a film thickness (nm).

The retardation value of the polycarbonate film is 3,000 nm or more, preferably 4,000 nm or more. When a polycarbonate film having a retardation value of less than 3,000 nm is used, colored interference fringes occur, and when polarizing ophthalmic lenses are used, they cause vertigo-headache, etc. Although not specially limited, the upper limit value of the retardation value is normally sufficiently 40,000 nm or less.

The polycarbonate film having a retardation value of 3,000 nm or more is produced by a method in which a polycarbonate film is prepared by a melt-extrusion method or casting method, heated to a temperature higher than the glass transition temperature of the polycarbonate by approximately 5°C to 30°C and unidirectionally stretched. In this case, the thickness and stretch ratio of the polycarbonate film are factors that affect the retardation value.

The thickness of the polycarbonate film is preferably 30 to 1,000 $\mu$m, more preferably 150 to 800 $\mu$m, still more preferably 200 to 400 $\mu$m. Since polycarbonate films are attached to both of the surfaces of the polarizing film, one polycarbonate film having one thickness may be attached to one surface, and the other polycarbonate film having the other thickness may be attached to the other surface. In view of production efficiency, however, it is preferred to attach polycarbonate films of the same specification.

The thickness of the polycarbonate film on the side where the resin composition is to be injected is preferably 30 to 1,000 $\mu$m, more preferably 150 to 800 $\mu$m, still more preferably 200 to 400 $\mu$m. When the thickness of the polycarbonate film is too small, stretching efficiency needs to be increased, which leads to poor productivity. Further, such a polycarbonate film may be melted or may easily have creases due to the heat of the aromatic polycarbonate resin that is injected when the insert-molding is carried out. Further, its role as a surface protective layer for the polarizing ophthalmic lens does not fully function any longer. When the thickness of the polycarbonate film is too large, such a polycarbonate film does not well follow the curvature of a mold during the insert-molding, and it is sometimes required to pre-shape it before the insert-molding.

A polarizing film per se is known, and various types thereof can be used. In recent years, further, technical developments are actively under way. A polarising film formed of PVA can be employed as one excellent in the advantage of a cost.

(Insert-molding)

The polarizing ophthalmic lens of this invention is obtained by insert-molding. For the insert-molding, there can be employed conventionally existing molding methods such as injection molding, injection press-molding, etc. The polarizing ophthalmic lens is obtained by placing the functional film beforehand in a mold to be used for molding, injecting the resin composition into the mold and carrying out molding.

After obtained by molding, the polarizing ophthalmic lens of this invention is provided with a hard coating and cut as required, and then a hard coating is formed on the cut surface as required, attaching hole(s), etc., necessary for assembling sunglasses is/are made, and such lenses assembled and used.

Examples

Examples 1 - 2 and Comparative Examples 1 - 2

1. Preparation of functional film

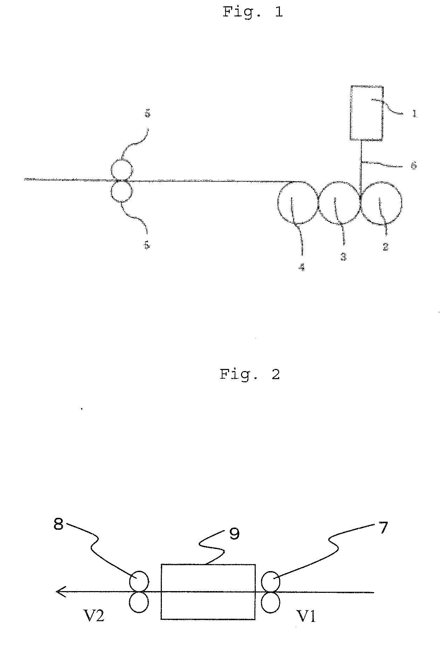

A polycarbonate resin having a molecular weight of 23,700, produced from bisphenol A and phosgene by an interfacial polymerization method, was continuously extruded with an extruder having a screw measuring 120 mm in diameter and having and a T-die lip shown in Fig. 1 at a temperature of approximately 280°C with a width of 1,200 mm. The extrudate was rolled between a first cooling roll and a second cooling roll by a double-side touching method to be molded while cooling and taken up with a take-up roll to give a polycarbonate film having a thickness of 0.5 mm, a width of 1,210 mm and a length of 400 m. The thus-obtained polycarbonate film had a retardation value of 120 nm in the film center. The retardation value was measured with KOBRA W supplied by Oji Scientific Instruments at a measurement wavelength of 590 nm.

The thus-obtained polycarbonate film was stretched with a monoaxial stretching machine shown in Fig. 2 at a stretching temperature of 159°C, at a stretch ratio of 1.7 times, at a feed speed of 4.0 m/minute and under a tension of 1,010 N, to give a polycarbonate film having a thickness of 380 $\mu$m and a width of 912 mm. The thus-obtained polycarbonate film had a retardation value of 5,600 nm to 5,900 nm.

Polycarbonate films obtained in the above manner were attached to both of the surfaces of a polarizing film formed of PVA to give a functional film.

(Experiment 1)

Components shown in Table 1 were fully mixed at amounts ratios shown in Table 1 with a tumbler, and then the mixture was pelletized with a 30 mm diameter vented extrusion-molding machine at 260 to 280°C to prepare pellets of a resin composition.

The thus-obtained pellets were dried at 120°C for 4 hours, and subjected to film insert-molding with an injection molding machine NISSEI ES4000 at a cylinder temperature of 290°C and a mold temperature of 100°C. An insert film was prepared by cutting the above functional film such that it had the form of a circle having a diameter of 100 mm, and it was set in a mold. The resin composition was injected into the mold at a resin injection pressure of 30 MPa, and the insert of lens was pressed with a die at 25 MPa for 30 seconds to give a polarizing ophthalmic lens. The polarizing ophthalmic lens immediately after the molding was observed in order to confirm whether or not creases occurred. Table 1 shows the results.

The thus-obtained polarizing ophthalmic lens was treated at a temperature of 90°C at a humidity of 95 % for 2 hours, then left at room temperature for 30 minutes, then treated at -20°C for 2 hours and left at room temperature for 30 minutes. These procedures were taken as one cycle treatment, and after the polarizing ophthalmic lens was subjected to 100 cycle treatments, it was observed in order to confirm whether or not it had film separation, a crack, a craze, etc. Table 1 shows the results.

(Experiment 2)

Molding was continuously carried out 250 shots under the same conditions as those in Experiment 1, to confirm whether or not polarizing ophthalmic lenses and the mold were soiled or had any substance attached thereto. Further, it was confirmed whether or not the functional films were separated from the polarizing ophthalmic lenses. Table 1 shows the results.

(Measurement of spectral light transmittance)

Pellets obtained in each Example were separately molded with an injection molding machine (cylinder temperature 350°C, one minute cycle) to give "flat plates for measurement" (length 90 mm x width 50 mm x thickness 2 mm). Each of the above "flat plates for measurement" was measured for a spectral light transmittance over a wavelength region of 300 nm to 500 nm with Cary 5000 supplied by Varian Inc., and spectral light transmittances at 380 nm were determined. Table 1 shows the results.

Explanation of symbols in Table

PC1: Polycarbonate having a molecular weight of 22,500 (Panlite L-1225WP, supplied by Teijin Chemicals, Ltd.), a low-molecular-weight component content 0.2 % by weight

PC2: Polycarbonate having a molecular weight of 27,000 (Panlite K-1285WP, supplied by Teijin Chemicals, Ltd.), a low-molecular-weight component content 0.2 % by weight

UV-1: Benzotriazole type ultraviolet absorbent (ADK STAB LA-31, supplied by ADEKA CORPORATION), molecular weight 659

UV-2: Benzotriazole type ultraviolet absorbent (ChemiSorb 79, supplied by CHEMIPRO KASEI KAISHA, LTD.), Molecular weight 323

A1: Phosphorus-containing stabilizer: tris(2,4-di-tert-butylphenol)phosphite (IRGAFOS168, supplied by Ciba Japan K.K.), molecular weight 647

A2: Phosphorus-containing stabilizer mixture: tetrakis(2,4-di-tert-butylphenyl)-4,4'-biphenylene diphosphonite as a main component, (HostanoxP-EPQ, supplied by Clariant (Japan) K.K.)

A3: Pentaerythritol type phenol-containing antioxidant: pentaerythritol tetrakis(3-(3,5-di-tert-butyl-4-hydroxyphenyl)propionate) (IRGANOX1010, supplied by Ciba Japan K.K.), molecular weight 1,178

L1: Mold release agent: A mixture of alkyl monostearate with alkyl triglycerin (SL-900A, supplied by RIKEN VITAMIN CO., LTD.)

Low-molecular-weight components in polycarbonate in the raw materials and in resin compositions in Table were measured with an HLC-8820GPC system supplied by TOSOH CORPORATION with using three columns, TSK-gel Super HZ 4000, 3000 and 2000 and using chloroform as an eluant. They were detected by means of UV at 254 nm, and components having a molecular weight of 1,000 or less were determined.

Table 1

| | | Example 1 | Example 2 | Comparative Example 1 | Comparative Example 2 |
|---|---|---|---|---|---|
| PC1 | Formulation (part by weight) | 100 | 100 | 100 | |
| PC2 | | | | | 100 |
| UV1 | | 0.18 | 0.04 | | 0.18 |
| UV2 | | | 0.3 | 0.8 | |
| A1 | | 0.01 | 0.01 | 0.1 | 0.01 |
| A2 | | 0.02 | | | 0.02 |
| A3 | | 0.1 | 0.1 | 0.1 | 0.1 |
| L1 | | 0.25 | 0.25 | 0.25 | 0.25 |
| 380 nm Transmittance | % | 0.005 | 0.004 | 0.005 | 0.005 |
| Low molecular weight component | % | 0.5 | 0.7 | 1.2 | 0.5 |
| Experiment 1 | After molding | No problem | No problem | No problem | Film had creases |
| | After heat cycle treatment | No problem | No problem | Film separated | - |
| Experiment 2 | Soiled or anything adhering | No problem | No problem | Soiled much | - |
| | Functional film separated or not | No problem | No problem | No problem | - |

Effect of the Invention

The polarizing ophthalmic lens of this invention has an excellent polarizing function and has an ultraviolet light protection effect and an eyesight correction effect. Further, the polarizing ophthalmic lens of this invention is excellent in impact resistance, and even when it contains an ultraviolet absorbent, it has little or no separation, soiling or creases. According to the production method of this invention, there can be efficiently produced ophthalmic lenses that are excellent in impact resistance and have little or no separation, soiling or creases. According to the method for preventing the soiling of a polarizing ophthalmic lens, there can be obtained an ophthalmic lens that is excellent in impact resistance and has little or no soiling.

Industrial Utility

The polarizing ophthalmic lens of this invention can be used as an ophthalmic lens for glare protection.

**Claims**

1. A polarizing ophthalmic lens obtained by inserting a functional film formed of a polarizing film and polycarbonate films which have a retardation value of 3,000 nm or more each and are attached to both surfaces of the polarizing film into a mold beforehand, and injecting a resin composition to carry out molding **characterized in that** said resin composition containing 100 parts by weight of an aromatic polycarbonate resin having a viscosity average molecular weight of 17,000 to 26,000 and 0.1 to 0.5 part by weight of an ultraviolet absorbent having a molecular weight of 300 or more, the content of low-molecular-weight components having a molecular weight of 1,000 or less being 1 % by weight or less.

2. The polarizing ophthalmic lens of claim 1, wherein said resin composition has a light transmittance of 0.01 % or less at a wavelength of 380 nm when it has a thickness of 2 mm.

3.  A polarizing ophthalmic lens of claim 1 or 2, wherein the polycarbonate film on the side where said resin composition is injected has a thickness of 30 to 1,000 $\mu$m.

4.  A method for producing a polarizing ophthalmic lens, which comprises inserting a functional film formed of a polarizing film and polycarbonate films which have a retardation value of 3,000 nm or more each and are attached to both surfaces of the polarizing film into a mold beforehand, and injecting a resin composition to carry out molding **characterized in that**
    said resin composition contains 100 parts by weight of an aromatic polycarbonate resin having a viscosity average molecular weight of 17,000 to 26,000 and 0.1 to 0.5 part by weight of an ultraviolet absorbent having a molecular weight of 300 or more, and the content of low-molecular-weight components having a molecular weight of 1,000 or less is 1 % by weight or less.

5.  The method of claim 4, wherein said resin composition has a light transmittance of 0.01 % or less at a wavelength of 380 nm when it has a thickness of 2 mm.

6.  The method of claim 4 or 5, wherein the polycarbonate film on the side where said resin composition is injected has a thickness of 30 to 1,000 $\mu$m.

7.  A method for preventing the soiling of a polarizing ophthalmic lens in the production of the polarizing ophthalmic lens by inserting a functional film formed of a polarizing film and polycarbonate films which have a retardation value of 3,000 nm or more each and are attached to both surfaces of the polarizing film into a mold beforehand and injecting a resin composition to carry out molding **characterized in that**,
    the method comprising using, as said resin composition, a resin composition containing 100 parts by weight of an aromatic polycarbonate resin having a viscosity average molecular weight of 17,000 to 26,000 and 0.1 to 0.5 part by weight of an ultraviolet absorbent having a molecular weight of 300 or more, the content of low-molecular-weight components having a molecular weight of 1,000 or less being 1 % by weight or less.

8.  The method of claim 7, wherein said resin composition has a light transmittance of 0.01 % or less at a wavelength of 380 nm when it has a thickness of 2 mm.

9.  The method of claim 7 or 8, wherein the polycarbonate film on the side where said resin composition is injected has a thickness of 30 to 1,000 $\mu$m.

Fig. 1

Fig. 2

## INTERNATIONAL SEARCH REPORT

| | International application No. |
| --- | --- |
| | PCT/JP2009/059099 |

### A. CLASSIFICATION OF SUBJECT MATTER
*G02C7/12*(2006.01)i, *G02B1/04*(2006.01)i, *G02B5/30*(2006.01)i, *G02C7/02* (2006.01)i

According to International Patent Classification (IPC) or to both national classification and IPC

### B. FIELDS SEARCHED

Minimum documentation searched (classification system followed by classification symbols)
G02C7/12, G02B1/04, G02B5/30, G02C7/02

Documentation searched other than minimum documentation to the extent that such documents are included in the fields searched
Jitsuyo Shinan Koho 1922-1996 Jitsuyo Shinan Toroku Koho 1996-2009
Kokai Jitsuyo Shinan Koho 1971-2009 Toroku Jitsuyo Shinan Koho 1994-2009

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2001-315241 A (Yamamoto Kogaku Co., Ltd.), 13 November, 2001 (13.11.01), Full text (particularly, Claims 6, 11, 12; Par. No. [0031]; example 5) & US 2002/0136897 A1 & EP 1193535 A1 & WO 2001/084217 A1 & CN 1365455 A | 1-9 |
| Y | JP 9-5683 A (Tsutsunaka Plastic Industry Co., Ltd.), 10 January, 1997 (10.01.97), Full text; all drawings (particularly, Claim 1) (Family: none) | 1-9 |

☒ Further documents are listed in the continuation of Box C. ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 29 July, 2009 (29.07.09) | 11 August, 2009 (11.08.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**13**

**INTERNATIONAL SEARCH REPORT**

International application No.

PCT/JP2009/059099

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 3-39903 A  (Mitsubishi Gas Chemical Co., Inc.),<br>20 February, 1991 (20.02.91),<br>Full text (particularly, Claims 1, 2, 4 )<br>& US 5051309 A            & EP 395019 A2<br>& DE 69006533 D | 1-9 |
| Y | JP 2003-231803 A  (Mitsubishi Engineering-Plastics Corp.),<br>19 August, 2003 (19.08.03),<br>Full text (particularly, Claim 1; Par. Nos. [0035], [0040]; descriptions on tables 1, 2 concerning examples)<br>(Family: none) | 1-9 |
| Y | JP 2003-231804 A  (Mitsubishi Engineering-Plastics Corp.),<br>19 August, 2003 (19.08.03),<br>Full text (particularly, Claim 1; Par. Nos. [0036], [0042]; descriptions on tables 1, 2 concerning examples 1 to 7)<br>(Family: none) | 1-9 |
| Y | WO 2005/116138 A1  (Teijin Chemicals Ltd.),<br>08 December, 2005 (08.12.05),<br>Full text (particularly, Claim 1; page 7, lines 21 to 23; page 8, lines 5 to 24; examples 1 to 6)<br>& US 2006/0240739 A1 | 1-9 |
| Y | JP 2003-301101 A  (Mitsubishi Engineering-Plastics Corp.),<br>21 October, 2003 (21.10.03),<br>Full text<br>(Family: none) | 1-9 |
| Y | JP 2001-100160 A  (Yamamoto Kogaku Co., Ltd.),<br>13 April, 2001 (13.04.01),<br>Full text; all drawings<br>(Family: none) | 1-9 |
| Y | JP 2006-227591 A  (Daicel Chemical Industries, Ltd.),<br>31 August, 2006 (31.08.06),<br>Full text<br>(Family: none) | 1-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3039903 A

- US 6814896 B